# EUROPEAN PATENT SPECIFICATION

(11) **EP 0 832 583 B1**
(45) Date of publication and mention of the grant of the patent: **21.04.2004**
(21) Application number: 97307323.2
(22) Date of filing: 19.09.1997
(51) Int. Cl.: A47C 3/30, A47C 7/50, A47C 1/024

(54) **Locking fluid springs**
Blockierungsfeder mit Fluidum
Ressorts de blocage à fluide

(30) Priority: 27.09.1996 GB 9620164
(43) Date of publication of application: 01.04.1998
(73) Proprietor: Industrial Gas Springs Ltd., Mitcham, Surrey CR4 4HR (GB)
(72) Inventor: Jackson, Darren D., East Grinstead, West Sussex, RH19 2BP (GB)
(74) Representative: Lock, Graham James

(56) References cited:
- EP-A- 0 421 470
- DE-A- 3 909 461
- US-A- 4 595 182

## Description

This invention relates to locking fluid springs hereinafter called gas springs, although they may contain oil or gas or a mixture of both. A gas spring is a common device used to move or support a load using compressed fluid. It is a self-contained device that generally comprises a cylinder within which moves a piston having attached thereto a piston rod which extends out of the cylinder and is attached to the load to be moved or supported. The piston and rod are free to move within the cylinder so that the gas pressure will either forcibly extend or retract the piston rod against the attached load, depending on the particular arrangement of gas spring employed.

In addition to the compressed gas (usually nitrogen) the gas spring may contain a quantity of oil or other fluid intended to provide a controlled rate of movement (damping). This is achieved as the oil or other fluid is forced through small holes within the gas spring.

A common variation of the ordinary gas spring is a locking gas spring which incorporates a valve either within the piston or the cylinder, that can be operated by external means, typically a push button or lever. This valve is arranged to open and close a path within the piston or cylinder that effectively allows or prevents movement of the fluid within the cylinder from one side of the piston to the other. By closing the valve and preventing the movement of fluid, the piston rod is prevented from moving within the cylinder and the gas spring becomes locked in position. If the entrapped volume is oil or other incompressible fluid the locking spring is locked hydraulically and is very rigidly locked. If the entrapped fluid is gas the locking spring remains slightly flexible. A rigidly locking gas spring is used for example in the case of the height adjustment of a hospital operating table whereas a flexible locking gas spring is commonly used in office chairs.

Another use of locking gas springs is to provide the lockable movement of the leg rests and back rests in reclining aircraft seats.

A problem arises in the use of locking gas springs in that if someone tries to forcibly move the object supported by the gas spring without unlocking it in the proper manner damage may be caused requiring expensive repair. In the case of aircraft seats if parts such as a leg rest cannot be moved out of the way in an emergency it can be dangerous.

An object of the present invention is to provide a locking gas spring which will unlock when subjected to an overload when in the locked position, thus allowing the supported object to be moved without the need to operate the unlocking valve in the normal way and thus preventing damage to the locking gas spring or supported object. Preferably once the object has been forcibly pushed out of the way it stays in its new position so as not to cause an obstruction. To do this the locking spring must unlock, move to the new position and then automatically re-lock in the new position to which it has been pushed. Once the overload ceases it is a requirement that the gas spring will automatically reset so that it may be used again without any resetting or adjustment.

A locking gas spring with an overpressure release is shown in US-A-5137124. However the overpressure sealing member is not positively biased to a sealing position with a predetermined pressure by a biasing member, which will provide a positive automatic resetting in a locked position on release of excess pressure.

EP0421470 discloses a pressure tube-piston device comprising two working spaces connected by a control flow passage and an excess pressure flow passage.

Relief passages incorporating spring biased valves are known for example from GB-A-2111168, but such valves are in hydraulic damping systems where the valves open on every movement of the damping piston. They are not previously known in locking gas springs for preventing an overload.

Accordingly in one aspect the invention provides a locking gas spring comprising a piston movable in a cylinder containing a fluid so that the movement of the piston varies the pressure of the fluid, a first flow path between opposite sides of the piston, controlled by valve means operable by operating means from externally of the cylinder, the operating means being operable to move the valve means in the first flow path between a locked position of the spring preventing flow of the fluid from one side of the piston to the other and an unlocked position allowing controlled flow of fluid through the first flow path, a relief flow path distinct from the first flow path, a closure member for closing the relief flow path, characterised by the relief flow path being distinct along its entire path from the first flow path and by spring biasing means arranged to urge the closure member with a predetermined force to a normally closed position closing the relief path, the arrangement being such that excess pressure on one side of the piston will act to move the closure member against the action of the biasing means to an open position in which fluid can flow through the relief flow path to relieve the excess pressure and allow movement of the piston in the cylinder while the valve remains in its locked position, the biasing means automatically acting to close the relief flow path on relief of the excess pressure.

Preferably the gas spring is connected between a load and a support member so as to support the load. The biassing means is arranged to exert a predetermined pressure on the closure member to maintain the relief flow path closed unless a pressure is exerted at least 30%, preferably 50% greater than and with advantage at least twice the pressure required to support the rated load. For any particular use the rated load which is required to be supported is predetermined and the load which is required to open the relief flow path to avoid damage can be assessed. The gas spring is easily adapted for a particular use by selecting an appropriate biassing device.

Preferably the first flow path is through the centre of the piston and the relief flow path is also through the piston.

Preferably the closure member comprises an outer annulus of the piston slidable axially relative to a central portion of the piston. Biasing means, for example in the form of a compression coil spring, biases the annulus to a normal sealing position around the central portion in which position the relief passage is closed.

The closure member may either be biased against a shoulder and only movable in one direction to relieve pressure or may be biased in each direction to the sealing position and movable in either direction to an open position to relieve pressure.

One embodiment of locking gas spring will now be described, by way of example only, with reference to the accompanying drawings of which:-
Figure 1 is an axial section through a conventional locking gas spring,
Figures 2 and 3 show the central part of a gas spring modified in accordance with the invention, respectively in the sealed and relieved condition of the spring, and
Figure 4 shows a gas spring in accordance with the invention in combination with an aircraft seat and footrest.

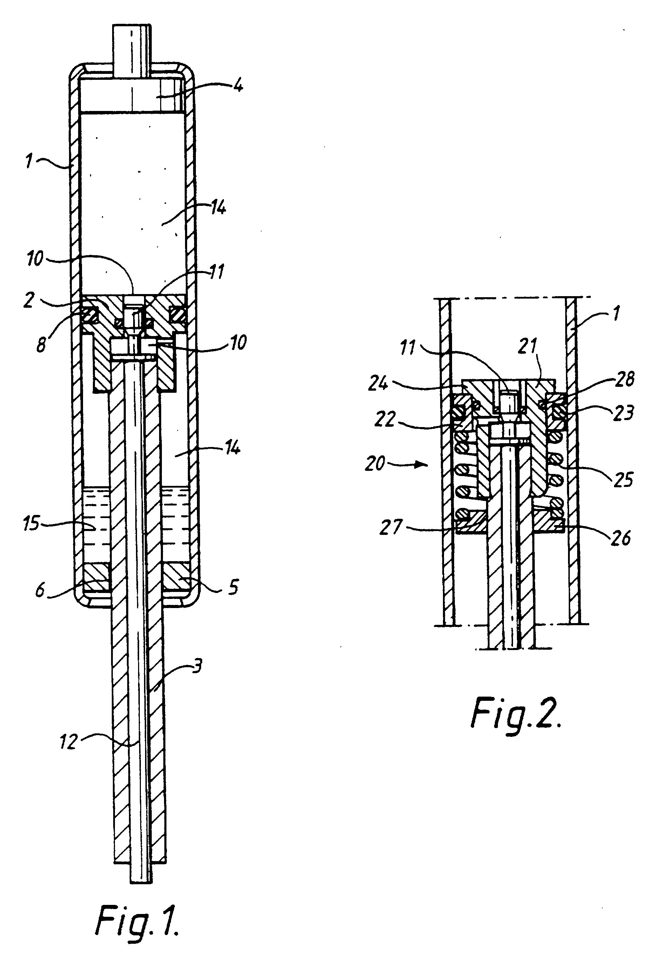

As shown in Figure 1 a conventional locking gas spring comprises a cylinder 1 in which a piston 2 connected to a piston rod 3 is slidable axially. One closed end 4 of the cylinder is intended to be connected to a support or object to be supported. The piston rod 3 is slidable (in sealed manner) through the other closed end 5 via sealing means 6 and is intended to be connected to the other of the support and member to be supported. A sealing ring 8 located around the periphery of the piston seals against the internal surface of the cylinder. A first flow passage 10 extends through the centre of the cylinder and a valve member 11 is located in this passage and operable from a position external to the cylinder. A push rod 12 is arranged to move the valve between a closed position (as shown) sealing the passage 10 and preventing flow of fluid from one side of the piston to the other, and an open position in which fluid can flow in a controlled manner from one side of the piston to the other. The cylinder is filled with gas 14 and/or oil 15. When operating member 12 is moved to open the valve the piston can move within the cylinder so that the relative positions of parts connected to the cylinder end 4 and the piston rod 3 can be changed. Once the operating member is moved to close the valve the gas spring acts to retain those parts in their relative positions, albeit with some flexibility caused by compression of the gas. The operating member need not, of course, be a rod as shown but the valve can be operated electrically, for example, by a push button in the arm rest of an aircraft seat, where the gas spring is located to support the backrest or footrest of the seat.

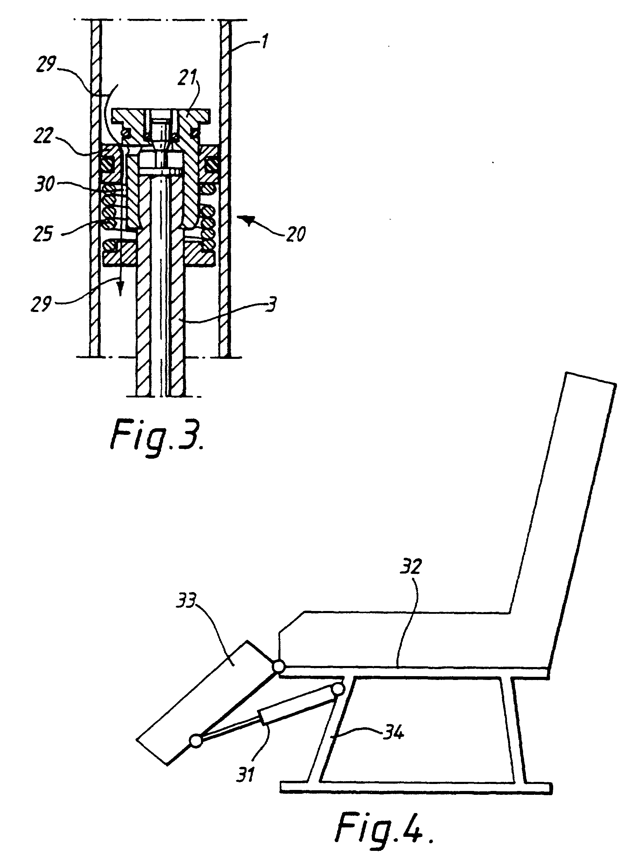

In order to prevent damage to the gas spring, or parts supported thereby if those parts are subjected to excessive force, the piston is preferably modified according to the arrangement of Figures 2 and 3. The remainder of the gas spring being similar to that shown in Figure 1. In the arrangement of Figures 2 and 3 a piston 20 slidable in the cylinder 1 and connected to piston rod 3 is formed in two parts axially slidable relative to one another. A first central part 21 contains a flow passage 10 and valve 1 connected to an operating rod 12 as in the arrangement of Figure 1. A second annular portion 22, forming a closure member, is located around the central portion 21 of the piston and is provided with annular sealing means 23 for sealing against the internal wall of the cylinder. The annulus 22 is biased against a shoulder 24 on the central portion 21 by a compression coil spring 25 surrounding the central portion 21 and held compressed between the annulus 23 and a shoulder 26 of a stop member 27 secured around the piston rod 3.

By forming the piston in two parts, a relief passage 30 from one side of the piston to the other can effectively be opened or closed by the axial movement of the annulus 22 relative to the central portion 21. With the annulus in the closed position (Figure 2) to which it is biased by the spring 25, the closure member 22 forms an effective seal with the central portion 21 via annular sealing means 28. However, if the closure member is moved away from the shoulder 24 against the action of the spring 25 to the position shown in Figure 3, the passage 30 indicated by arrow 29 is opened, fluid can flow from one side of the piston to the other and any excess pressure on the upper side of the piston, as shown, is relieved. The upper side of the annulus 22, i.e. that side abutting the shoulder 24, is subject to the pressure on the opposite side of the piston from the piston rod. If therefore the piston is pushed inwardly in an attempt to move the piston rod or the object to which the piston rod is attached with excess pressure, excess pressure will build up in the gas or other fluid on the opposite side of the piston and this pressure will act on the annulus 22 to move it to open the relief passage. The piston will therefore be able to move in the cylinder and allow movement of the object being subjected to such pressure. In this way damage is avoided. As soon as excess pressure is relieved the biasing means returns the closure member to its closed position and again locks the spring in its locking position. An object moved by excess pressure will thus be held in a position to which it has been moved. The gas spring is automatically reset and does not need any adjustment before it is again usable by the normal operation of the operating member 12 and valve 11.

Figure 4 shows a gas spring 31 in accordance with Figures 2 and 3 in use connecting the leg-rest 33 of an aircraft seat 32 to the seat support 34.

The overload force at which the closure member moves (and hence the force at which the locking spring automatically unlocks and moves) can be specified by selecting an appropriate coil spring. A stronger coil spring results in a higher force being necessary before the pressure is released and vice-versa. Thus the design can be tailored to suit a variety of situations.

Taking the aircraft seat as an example, the normal purpose of the locking gas spring is firstly to support and move the weight of the leg-rest itself so that the passenger may adjust its position as desired. To do this, the locking gas spring typically exerts a force on the leg-rest of 300 N, equivalent to about 70 Ibs. (Although the leg-rest is not particularly heavy, a force of this magnitude is required because the gas spring is positioned near to the leg-rest pivot and is therefore working at a mechanical disadvantage). This force, which we call F, is the normal force exerted by the gas spring when the locking valve is open.

Once the leg-rest is in the desired position, the locking valve is closed and leg-rest is held in place. In addition to supporting the leg-rest, the gas spring must now also support the weight of the passenger legs. This will typically result in a load on the gas spring of 600 N, or 2 X F. (This is the normal locked load - i.e. the load that the spring must support in normal use when the locking valve is closed, and will vary typically between 1 and 6 x F depending on the application). The leg-rest and associated structure will be designed to tolerate this load without difficulty.

Assume now that the passenger tries to stand up on the extended leg-rest so that it is subjected to his full weight. Without the overload-release feature this would result in a load on the gas spring and the parts of the seat to which it is attached of over 3000 N for example, a force of 10 x F. This force would easily break the leg-rest and/or the gas spring. To solve this problem, a coil-spring is selected to provide overload-release at a force of 900 N, or 3 x F. This force is high enough that release does not occur during normal use (i.e. it is 50% greater than the 2 x % above) but is low enough that the leg-rest can tolerate it without damage (i.e. it is lower than the 10 x F). It may be 2, 3 or more times F.

The device an be easily and accurately tailored to suit a wide range of operating conditions by simply selecting an appropriate coil spring. Also, the design results in a positive and reliable release and re-setting action, the re-setting action taking place immediately the overload is removed.

The arrangement of the closure member and coil spring can be reversed to give the same advantageous behaviour in response to tension forces rather than compression forces. Alternatively, two coil springs may be employed acting to keep the closure member in a centrally sealed position, allowing the overload release feature to act in response to both compression and tension forces within the same unit.

The closure member and relief passage need not be on the piston itself but could be in a bypass passage from one end of the cylinder to the other. The invention can be used in any system where it is desired to protect from damage due to overload forces, for example in support arms, levers or columns, sliding or rotating access covers, flaps, guards or gates.

## Claims

1. A locking gas spring comprising a piston (22) movable in a cylinder (1) containing a fluid (14) so that the movement of the piston varies the pressure of the fluid, a first flow path (10) between opposite sides of the piston, controlled by valve means (11) operable by operating means (12) from externally of the cylinder, the operating means being operable to move the valve means (11) in the first flow path between a locked position of the spring preventing flow of the fluid from one side of the piston to the other and an unlocked position allowing controlled flow of fluid through the first flow path, a relief flow path (30) distinct from the first flow path, a closure member (22) for closing the relief flow path, **characterised by** the relief flow path being distinct along its entire path from the first flow path and by spring biasing means (25) arranged to urge the closure member (22) with a predetermined force to a normally closed position closing the relief path, the arrangement being such that excess pressure on one side of the piston will act to move the closure member (22) against the action of the biasing means to an open position in which fluid can flow through the relief flow path (30) to relieve the excess pressure and allow movement of the piston in the cylinder while the valve remains in its locked position, the biasing means (25) automatically acting to close the relief flow path (30) on relief of the excess pressure.

2. A gas spring according to claim 1 **characterised in that** the piston and cylinder are connected between a fixed support (34) and a movable load (33) and the biassing means (25) is arranged to exert a predetermined force sufficient to maintain the relief flow path closed unless the excess pressure is at least 30% greater than that generated by specified forces on the load.

3. A gas spring according to claim 1 **characterised in that** the relief flow path is external to the cylinder (1).

4. A gas spring according to claim 1 **characterised in that** the first flow path (10) is through the centre of the piston (2) and the relief flow path (30) is also through the piston.

5. A gas spring according to claim 4 **characterised in that** the closure member comprises an outer annulus (22) of the piston slidable axially relative to a central portion (21) of the piston and the biasing means comprises a compression coil spring (25) arranged to bias the annulus (22) to a normal sealing position against the central portion (21) in which position the relief passage (30) is closed.

6. A gas spring according to any of claims 2 to 5 **characterised in that** the biasing means (25) bears against a fixed stop (26) at one side thereof and is movable in only one direction to relieve pressure.

7. A gas spring according to any of claims 2 to 4 **characterised** the closure member is biased in each direction to the sealing position and is movable in either direction against the biasing means to an open position to relieve the pressure.

8. A gas spring according to any of claims 1 to 7 **characterised in that** the fluid is compressed gas or is a mixture of oil and gas.

9. An aircraft seat in which a gas spring according to any of claims 1 to 8 is located between the seat support (34) and the leg rest (33) and/or back rest of the aircraft seat.

## Patentansprüche

1. Blockierungsfeder mit einem Fluidum, die einen Kolben (22) in einen Zylinder (1), der ein Fluidum (14) enthält, verschieblich aufweist, so dass die Bewegung des Kolbens den Druck des Fluidums verändert, und zwischen den entgegengesetzten Seiten des Kolbens einen ersten Flussweg (10) aufweist, der durch Ventilmittel (11), die durch Betätigungsmittel (12) von ausserhalb des Zylinders betätigbar sind, gesteuert ist; die Betätigungsmittel sind so betätigbar, dass durch sie das Ventilmittel (11) in den ersten Flussweg zwischen eine Blockierungsstellung der Feder, in der der Fluss des Fluidums von einer Seite des Kolbens zur anderen verhindert ist, und in eine Freigabeposition, in der ein kontrollierter Fluss von Fluid durch den ersten Flussweg freigegeben ist, verbracht wird; und einen Hilfsflussweg (30) getrennt vom ersten Flussweg sowie ein Schließglied (22) zum Schließen des Hilfsflussweges aufweist, **gekennzeichnet dadurch, dass** der Hilfsflussweg auf seinem ganzen Flussweg getrennt vom ersten Flussweg ist und durch Federvorspannmittel (25), die angeordnet sind, um das Schließglied (22) mit einer vorgegebenen Kraft in eine normaler Weise geschlossene Stellung zu drücken, um den Hilfsflussweg zu schließen, und dass die Anordnung so ist, dass ein Überdruck auf einer Seite des Kolbens so wirkt, dass das Schließmittel (22) gegen die Wirkung des Vorspannmittels in eine Offenstellung bewegt wird, in der Fluidum durch den Hilfsflussweg (30) fließen kann, um den Überdruck abzubauen und eine Kolbenbewegung im Zylinder zu erlauben, während das Ventilmittel in seiner Blockierungsstellung bleibt, und dass die Vorspannmittel (25) automatisch arbeiten, um den Hilfsflussweg (30) mit Hilfe des Überdrucks zu schließen.

2. Eine Fluidfeder nach Anspruch 1, **dadurch gekennzeichnet, dass** der Kolben und der Zylinder zwischen einem festen Halter (34) und einer beweglichen Last (33) eingebunden ist und das Vorspannmittel (25) so angeordnet ist, dass es eine vorgegebene Kraft erzeugt, die ausreichend ist, den Hilfsflussweg geschlossen zu halten, außer wenn der Überdruck mindestens 30% größer ist als jener der durch die genannte Kraft auf die Last erzeugt ist.

3. Eine Fluidfeder nach Anspruch 1, **dadurch gekennzeichnet, dass** der Hilfsflussweg außerhalb des Zylinders (1) verläuft.

4. Eine Fluidfeder nach Anspruch 1, **dadurch gekennzeichnet, dass** der erste Flussweg (10) durch die Mitte des Kolbens (2) verläuft und der Hilfsflussweg (30) auch durch den Kolben verläuft.

5. Eine Fluidfeder nach Anspruch 4, **dadurch gekennzeichnet, dass** das Schließglied einen äußeren Ring (22) des Kolbens umfasst, der gleitfähig zu einem mittigen Teil (21) des Kolbens ist, und dass die Vorspannmittel eine Schraubendruckfeder (25) umfassen, die so angeordnet sind, dass sie den Ring (22) in eine normale Dichtstellung gegen den mittigen Teil (21) vorspannen, in welcher Position der Hilfsflussweg (30) geschlossen ist.

6. Eine Fluidfeder nach einem der Ansprüche 2 bis 5, **dadurch gekennzeichnet, dass** das Vorspannmittel (25) an einer Seite von ihm sich gegen einen festen Halt (26) abstützt und nur in einer Richtung beweglich ist, um Druck abzulassen.

7. Eine Fluidfeder nach einem der Ansprüche 2 bis 4, **dadurch gekennzeichnet, dass** das Schließmittel in jeder Richtung zur Dichtstellung vorgespannt ist und in beiden Richtungen gegenüber den Vorspannmitteln in eine Öffnungsstellung beweglich ist, um den Überdruck abzulassen.

8. Eine Fluidfeder nach einem der Ansprüche 1 bis 7, **dadurch gekennzeichnet, dass** das Fluid ein komprimiertes Gas oder eine Mischung aus Öl und Gas ist.

9. Ein Flugzeugsitz in dem eine Fluidfeder gemäß einem der Ansprüche 1 bis 8 zwischen dem Sitzträger (34) und einer Beinstütze (33) und/oder einer Rückenlehne eines Flugzeugsitzes angeordnet ist.

## Revendications

1. Ressort de verrouillage à gaz comprenant un piston (22) mobile dans un cylindre (1) contenant un fluide (14), de telle sorte que le mouvement du piston fait varier la pression du fluide, une première voie d'écoulement (10) entre les côtés opposés du piston, commandé par un moyen de soupape (11) qui peut être actionné par des moyens de commande (12) à l'extérieur du cylindre, les moyens de commande pouvant être actionnés pour déplacer le moyen de soupape (11) dans la première voie d'écoulement entre une position verrouillée du ressort empêchant l'écoulement du fluide d'un côté du piston à l'autre et une position déverrouillée permettant un écoulement contrôlé de fluide à travers la première voie d'écoulement, une voie d'écoulement de décharge (30) distincte de la première voie d'écoulement, un élément de fermeture (22) pour fermer la voie d'écoulement de décharge, **caractérisé par le fait que** la voie d'écoulement de décharge est distincte, sur toute son étendue, de la première voie d'écoulement, et par des moyens de mise en état de précontrainte par ressort (25) arrangés pour presser l'élément de fermeture (22) avec une force prédéterminée dans une position normalement fermée qui ferme la voie de décharge, l'arrangement étant tel qu'une pression excessive s'exerçant sur un côté du piston aura pour effet de déplacer l'élément de fermeture (22), à l'encontre de l'action des moyens de mise en état de précontrainte, dans une position ouverte dans laquelle du fluide peut s'écouler à travers la voie d'écoulement de décharge (30) pour libérer la pression excessive et pour permettre le mouvement du piston dans le cylindre, tandis que la soupape reste dans sa position verrouillée, les moyens de mise en état de précontrainte (25) agissant de manière automatique pour fermer la voie d'écoulement de décharge (30) lors de la décharge de la pression excessive.

2. Ressort à gaz selon la revendication 1, **caractérisé en ce que** le piston et le cylindre sont reliés entre un support fixe (34) et une charge mobiles (33), et les moyens de mise en état de précontrainte (25) sont arrangés pour exercer une force prédéterminée suffisante pour maintenir fermée la voie d'écoulement de décharge, à moins que la pression excessive ne soit supérieure à concurrence d'au moins 30 % à celle générée par des forces spécifiées sur la charge.

3. Ressort à gaz selon la revendication 1, **caractérisé en ce que** la voie d'écoulement de décharge est située à l'extérieur au cylindre (1).

4. Ressort à gaz selon la revendication 1, **caractérisé en ce que** la première voie d'écoulement (10) passe par le centre du piston (2) et la voie d'écoulement de décharge (30) passe également par le piston.

5. Ressort à gaz selon la revendication 4, **caractérisé en ce que** l'élément de fermeture comprend un anneau externe (22) du piston, apte à coulisser en direction axiale par rapport à une portion centrale (21) du piston, et les moyens de mise en état de précontrainte comprennent un ressort hélicoïdal de compression (25) arrangé pour mettre l'anneau (22) en état de précontrainte dans une position normale d'étanchéisation contre la portion centrale (21), position dans laquelle le passage de décharge (30) est fermé.

6. Ressort à gaz selon l'une quelconque des revendications 2 à 5, **caractérisé en ce que** les moyens de mise en état de précontrainte (25) s'appuient sur un arrêt fixe (26) à un de leurs côtés et sont mobiles dans une seule direction pour relâcher la pression.

7. Ressort à gaz selon l'une quelconque des revendications 2 à 4, **caractérisé en ce que** le moyen de fermeture est mis en état de précontrainte dans l'une et l'autre direction pour prendre la position d'étanchéisation et est mobile dans l'une ou l'autre direction à l'encontre des moyens de mise en état de précontrainte pour prendre la position d'ouverture afin de décharger la pression.

8. Ressort à gaz selon l'une quelconque des revendications 1 à 7, **caractérisé en ce que** le fluide est du gaz comprimé ou un mélange d'huile et de gaz.

9. Siège pour aéroplane dans lequel est disposé un ressort à gaz selon l'une quelconque des revendications 1 à 8, entre le support de siège (34) et le repose-pied (33) et/ou le dossier du siège pour aéroplane.
